# EUROPEAN PATENT APPLICATION

(11) **EP 4 810 889 A1**
(43) Date of publication of application: **23.09.2026**
(21) Application number: 25300027.7
(22) Date of filing: 21.03.2025
(51) Int. Cl.: F28F 1/40, B33Y 80/00, F28F 7/02, F28F 13/00

(54) **HEAT EXCHANGER**

(71) Applicant: HiETA Technologies Limited, Coventry CV7 9JU (GB)
(72) Inventor: KAPSIS, Marios, Coventry, CV7 9JU (GB)
(74) Representative: D Young & Co LLP

(57) **Abstract**

A heat exchanger comprises a plurality of fluid flow channels. At least one of the fluid flow channels comprises at least one secondary heat exchanging surface. The secondary heat exchanging surface is in the form of a lattice structure comprising a repeating unit cell with beams. The beams vary in diameter along the length of each beam.

## Description

### TECHNICAL FIELD

The present invention relates to a heat exchanger, a method of manufacturing a heat exchanger and a computer-readable data structure.

### BACKGROUND

A heat exchanger may include a number of fluid flow channels through which fluid can flow so that heat may be exchanged by the fluid in respective channels of the heat exchanger. Heat exchangers can be useful for a range of applications, for example as a recuperator for recovering heat from exhaust gas from an internal combustion engine or gas turbine, or in other applications such as power generation or ventilation systems.

Increasing the wetted area (or surface area density) of the heat exchanging surfaces can increase the amount of heat transfer, but can adversely affect the fluid flow through the heat exchanger as an increase in surface area of the heat exchanging surfaces reduces the fluid flow area which increases the pressure drop across the heat exchanger which can negatively affect the heat transfer and the overall efficiency of the heat exchanger. Design of heat exchanging surfaces within a heat exchanger therefore requires numerous considerations in order to add solid material in locations where heat transfer is improved without severely impact the fluid flow.

Various approaches are described herein which seek to help address or mitigate some of the issues discussed above.

### SUMMARY

The disclosure is defined in the appended claims.

In accordance with some embodiments described herein, there is provided a heat exchanger comprising a plurality of fluid flow channels, at least one of the fluid flow channels comprising at least one secondary heat exchanging surface, wherein the at least one secondary heat exchanging surface is in the form of a lattice structure comprising a repeating unit cell with beams, wherein the beams vary in diameter along the length of each beam.

The unit cell may repeat with triple periodicity.

Each beam of a unit cell may meet at an intersection.

The diameter of each beam may be a maximum at a midpoint of each beam, wherein the midpoint is equidistance between adjacent intersections.

The diameter of each beam may increase along the length of the beam in a direction away from the intersection.

The diameter of each beam may increases linearly along the length of the beam from the intersection to the midpoint.

Each beam comprises a plurality of sections, wherein the diameter of each beam along a first section of the plurality of sections is constant and the diameter of each beam along a second section of the plurality of sections increases linearly, wherein the second section is between the first section and the midpoint.

The variation in diameter along the length of each beam may be symmetric about the midpoint of the beam.

In accordance with some embodiments described herein, there is also provided a method of manufacturing a heat exchanger comprising forming a plurality of fluid flow channels, at least one of the fluid flow channels comprising at least one secondary heat exchanging surface, wherein the at least one secondary heat exchanging surface is in the form of a lattice structure comprising a repeating unit cell with beams, wherein the beams vary in diameter along the length of each beam.

In accordance with some embodiments described herein, there is also provided a computer-readable data structure representing a design of a heat exchanger and a storage medium storing the data structure.

These aspects and other aspects will be apparent from the following detailed description. In this regard, particular sections of the description are not to be read in isolation from other sections.

### BRIEF DESCRIPTION OF DRAWINGS

Embodiments of the invention will now be described, by way of example only, with reference to accompanying drawings, in which:
Figure 1 schematically illustrates an example of a heat exchanger;
Figure 2 illustrates an example of a lattice structure employed within a heat exchanging surface in two dimensions;
Figure 3 illustrates an example of a lattice structure employed within a heat exchanging surface in three dimensions;
Figure 4 illustrates a further example of a lattice structure employed within a heat exchanging surface in three dimensions;
Figure 5 illustrates a further example of a lattice structure employed within a heat exchanging surface in three dimensions;
Figures 6A to 6D are graphs illustrating the variation in beam diameter along the length of the beam within a lattice structure;
Figure 7 illustrates one example of manufacturing equipment for manufacturing the heat exchanger by additive manufacture; and
Figure 8 is a flow diagram illustrating a method of manufacturing a heat exchanger.

### DETAILED DESCRIPTION

Aspects and features of certain examples and embodiments are discussed / described herein. Some aspects and features of certain examples and embodiments may be implemented conventionally and these are not discussed / described in detail in the interests of brevity. It will thus be appreciated that aspects and features of articles and systems discussed herein which are not described in detail may be implemented in accordance with any conventional techniques for implementing such aspects and features.

A heat exchanger comprises a plurality of fluid flow channels. At least one of the fluid flow channels comprises at least one secondary heat exchanging surface. The at least one secondary heat exchanging surface is in the form of a lattice structure comprising a repeating unit cell with beams. The beams vary in diameter along the length of each beam. Whilst it may be assumed that the wetted surface area of each beam could be increased by increasing the diameter of each beam, the larger diameter of each of the beams where they intersect each other reduces the overall wetted surface of the lattice structure. Equally, increasing the beam diameter uniformly causes a reduced free flow area, which increases the pressure drop and increase blockage at the regions where the beams intersect (node), inhibiting heat transfer. Advantageously, by varying the diameter of each beam along the length of each beam, the wetted surface area of the overall lattice structure can be increased compared to using beams of a constant diameter. Not only is the wetted area increased, but the pressure drop through the lattice structure employing a variable diameter beam is lower for the same fluid velocity compared to a lattice structure employing a constant diameter beam.

The unit cell may repeat with triple periodicity. This is not only simpler to manufacture, but also results in a more even fluid profile through the lattice structure.

Each beam of a unit cell may meet at an intersection, also referred to as a node. As mentioned above, increasing the diameter of each beam actually reduces the wetted surface area of the overall lattice structure since the area of the lattice taken up by each intersection increases, thus increasing the volume of material in the lattice rather than the wetted surface area.

The diameter of each beam may be a maximum at a midpoint of each beam, wherein the midpoint is equidistance between adjacent intersections. This maximises the amount of a material in each beam at the point furthest away from each intersection, thus maximising the wetted surface area of each beam without adversely impacting the wetted area of adjacent beams

The diameter of each beam may increase along the length of the beam in a direction away from the intersection. As mentioned above, minimising the diameter of the beam at each intersection minimises the volume of material at each intersection, thereby maximising the wetted surface area of the beam.

The diameter of each beam may increases linearly along the length of the beam from the intersection to the midpoint. This is not only easier to manufacture, but also minimises the pressure drop across the heat exchanging surface.

Each beam comprises a plurality of sections, wherein the diameter of each beam along a first section of the plurality of sections is constant and the diameter of each beam along a second section of the plurality of sections increases linearly, wherein the second section is between the first section and the midpoint. This allows for the variation in diameter of each beam to be optimised to maximise the wetted surface area whilst minimising the impact each beam has of the fluid performance of the heat exchanging surface and in particular the pressure drop across the heat exchanger.

The variation in diameter along the length of each beam may be symmetric about the midpoint of the beam. This results in a more even heat transfer across each beam (and correspondingly across each heat transfer surface).

In accordance with some embodiments described herein, there is also provided a method of manufacturing a heat exchanger comprising forming a plurality of fluid flow channels, at least one of the fluid flow channels comprising at least one secondary heat exchanging surface, wherein the at least one secondary heat exchanging surface is in the form of a lattice structure comprising a repeating unit cell with beams, wherein the beams vary in diameter along the length of each beam.

In accordance with some embodiments described herein, there is also provided a computer-readable data structure representing a design of a heat exchanger and a storage medium storing the data structure.

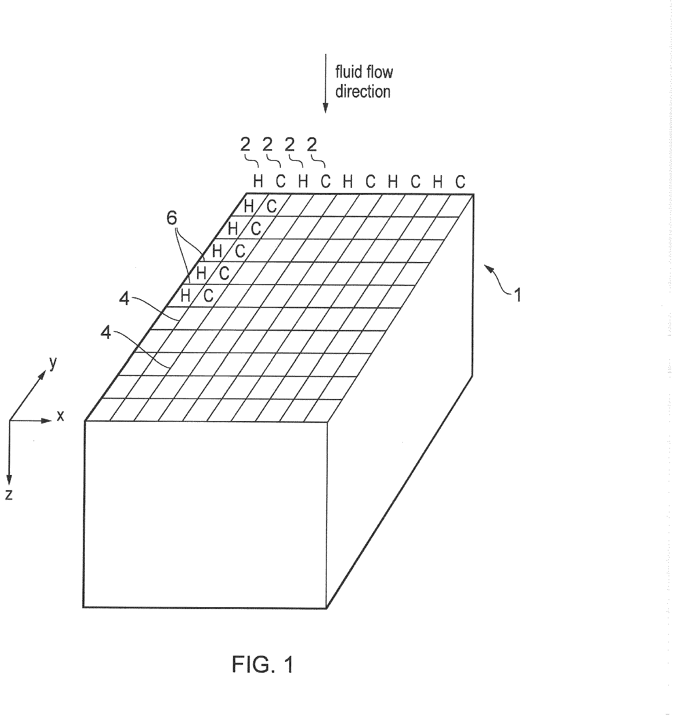

Figure 1 shows an example of a heat exchanger 1 in more detail. The heat exchanger 1 includes a number of fluid flow channels 2 through which fluid can flow in the fluid flow direction illustrated at the top of Figure 1. A number of alternating hot and cold fluid flow channels 2 are provided for the flow of hot fluid (first fluid) and cold fluid (second fluid) respectively. For example in the system of Figure 1 the hot fluid may be the exhaust gas from the combustor 306 which has left the turbine 31 and the cold fluid may be the compressed intake air from the compressor 308 which is pre-heated using the exhaust gas heat. Manifolds are provided to distribute fluid from a hot inlet conduit or cold inlet conduit respectively, and split the fluid between the respective hot or cold channels as appropriate. The heat exchanger could be a parallel flow heat exchanger in which the hot and cold fluid flows in corresponding directions through the channels or could be a counter-flow heat exchanger in which the hot fluid flows in the opposite direction to the cold fluid. The heat exchanger 1 could be used in other applications. For example, the heat exchanger could be an air-oil heat exchanger, such as those used within gas turbines to cool oil from bearing chambers and gear boxes by using air from the bypass duct. In this case, the air passes through the cold fluid flow channels and the oil passes through the hot fluid flow channels, such that heat is transferred from the oil to the air, thereby cooling the oil. Equally, the heat exchanger could be used for air cooling, where water flows through the cold fluid flow channels and air passes through the hot fluid flow channels, such that heat is transferred from the air to the water, thereby cooling the air.

Each fluid flow channel 2 is separated from adjacent fluid flow channels by a heat exchanging surface. In this example the hot fluid flow channels and cold fluid flow channels are separated by primary channel walls 4 which extend along the Y axis shown in Figure 1. Primary channel walls 4 can also be referred to as primary heat exchanging surfaces or primary surfaces. In addition, within each hot or cold fluid flow channel 2 a number of regions are internally sub divided by secondary surfaces 6 which divide different portions of the hot channel or different portions of the cold fluid flow channel 2 from one another. Secondary surfaces 6 can also be referred to as secondary heat exchanging surfaces or secondary channel walls. Although the primary mechanism of heat exchange is through the primary channel walls 4 between the hot and cold fluid flow channels 2, the internal sub divisions within a hot channel or within a cold channel by the secondary surfaces 6 provides additional surfaces through which heat can be conducted to the primary channel walls 4. The secondary surfaces 6 could be further walls which extend along the full length of the fluid flow channel 2 in the fluid flow direction, or could be subdividing fins which only extend partially along less than the full length of the fluid flow channel 2.

While Figure 1 shows an example where the hot fluid flow channels are aligned in a column and the cold fluid flow channels are aligned in a column, in other examples the hot fluid flow and cold fluid flow channels could be staggered or interleaved in a checkerboard pattern, so that each hot channel (other than the channels at the edge of the heat exchanger) is surrounded by cold channels on each side, and vice versa.

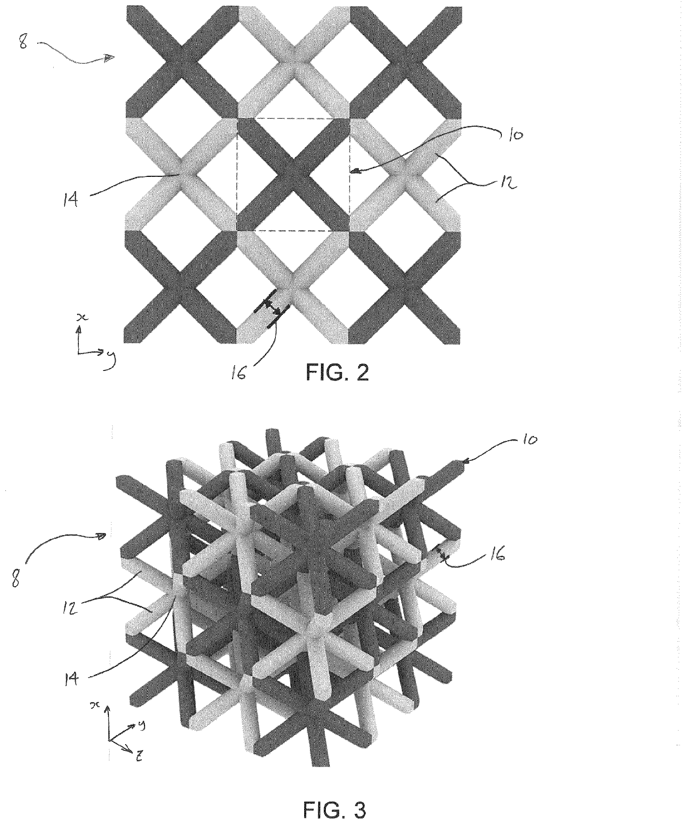

The heat exchanging surfaces may employ a lattice structure. In other words, one or more of the primary surfaces 4 and/or the secondary surfaces 6 may employ a lattice structure. Figure 2 shows, in two dimensions, an example of a lattice structure 8 employed within a heat exchanging surface, whilst Figure 3 shows the same example lattice structure 8 in three dimensions. A lattice structure is defined by a repeating unit cell 10. A unit cell 10 consists of a plurality of beams 12 which each meet at an intersection 14, also referred to as a node. In the example illustrated in Figure 2 each unit cell comprises 4 cylindrical beams, whilst in the example illustrated in Figure 3 each unit cell comprises 8 cylindrical beams, but other numbers and geometries of beams within a unit cell are also possible. The lattice structure can be defined by the size of the unit cell, in other words the number of and lengths of each of the beams 12, as well as by the diameter 16 of each of the beams. Equally, although each beam 12 within the unit cells 8 in both Figures 2 and 3 have the same length and diameter such that the intersection (or node) 14 of the unit cell is located in the centre of the unit cell, it will be appreciated that a unit cell may have beams with different length and/or diameters of beam such that the intersection (or node) 14 of the unit cell is not necessarily located in the centre of the unit cell.

It will also be appreciated that, although each beam 12 of a unit cell 10 within the lattice structure 8 meets at an intersection 14 of the unit cell 10, this only accounts for the first end of each beam 12, and the second end of each beam will meet with other beams at an intersection 14 of another unit cell 10. In other words, each beam 12 links a first unit cell to a second unit cell.

In the examples illustrated in Figures 2 and 3, the unit cells 10 form a repeating pattern in two and three directions respectively. In Figure 2, the unit cells 10 form a repeating pattern in directions corresponding, respectively, to the x and y axes in Figure 2, whilst in Figure 3 the unit cells 10 form a repeating pattern in directions corresponding, respectively, to the x, y and z axes in Figure 3. The repeating pattern in three directions (or dimensions) illustrated in Figure 3 can be referred to as triple periodicity, such that the unit cell within the lattice structure repeats with triple periodicity.

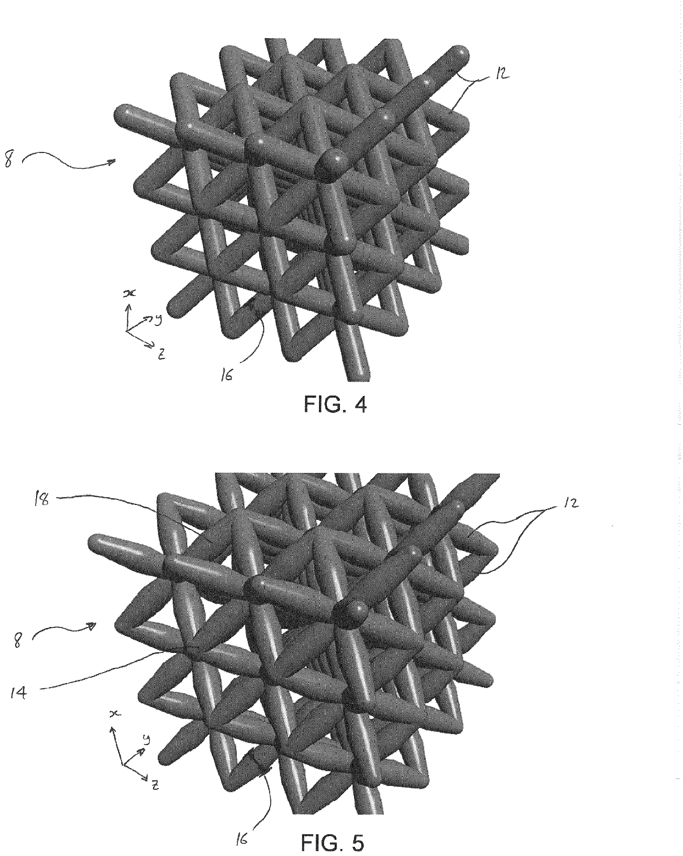

Figures 4 and 5 illustrate a further examples of a lattice structure 8 employed within a heat exchanging surface in three dimensions. Like in Figure 3, the lattice structures 8 in Figures 4 and 5 comprise a repeating unit cell 10 where the unit cell 10 repeats with triple periodicity. Figure 4 illustrates a lattice structure 8 where the beams 12 in each unit cell 10 have a larger diameter 16 than the beams 12 in each unit cell 10 of the lattice structure 8 illustrated in Figure 3. The lengths of each of the beams 12, however, is the same in the lattice structures 8 illustrated in Figures 3 and 4, such that the volume of material in the lattice structure of Figure 4 is greater than the volume of material in lattice structure of Figure 3. When used within the heat exchanger 1 of Figure 1, this results in the wetted surface area of the heat exchanging surfaces (the primary surfaces 4 and/or the secondary surfaces 6) employing the lattice structure of Figure 4 being higher and therefore resulting in an improved heat transfer for the heat exchanging surfaces.

Unlike Figures 3 and 4, the beams 12 in each unit cell 10 of the lattice structure 8 illustrated in Figure 5 vary in diameter 16 along the length of the beam 12. In other words, the diameter 16 of each of the beams is not constant. Each of the beams 12 has a midpoint 18 that is equidistance between adjacent intersections 14. In other words, each beam 12 extends from a first end at an intersection (or node) 14 of a first unit cell 10 to a second end at an intersection (or node) 14 of a second unit cell 10, and the midpoint 18 of each beam 12 is located equidistance between the first end and the second end (and the intersection, or node, 14 of the first unit cell 10 and the intersection, or node, 14 of the second unit cell 10 respectively).

As illustrated in Figure 5, the diameter 16 of each beam 12 is a maximum at the midpoint 18 of each beam 12. Further, in Figure 5 the diameter 16 of each beam 12 increases along the length of the beam 12 in a direction away from the intersection 14. In other words, the diameter 16 of each beam 12 is smallest at the first end and second end of each beam 12 and largest in the middle of the beam, where the first end of the beam is at an intersection (or node) 14 of a first unit cell 10 and the second end at an intersection (or node) 14 of a second unit cell 10 as described above.

In the example illustrated in Figure 5, the diameter 16 of each beam 12 increases linearly along the length of the beam 12 from the intersection 14 to the midpoint 18. In other words, the diameter 16 of each beam 12 increases linearly from both of the first end and the second end to the middle of the beam 12, such that the diameter 16 of each beam 12 increases linearly from the first end at the intersection (or node) 14 of the first unit cell 10 to the midpoint 18 of the beam, and the diameter 16 of each beam 12 increases linearly from the second end at the intersection (or node) 14 of the second unit cell 10 to the midpoint 18 of the beam. This linear variation in the diameter 16 of each beam 12 is not essential, however, and other variations in diameter are also possible as discussed below.

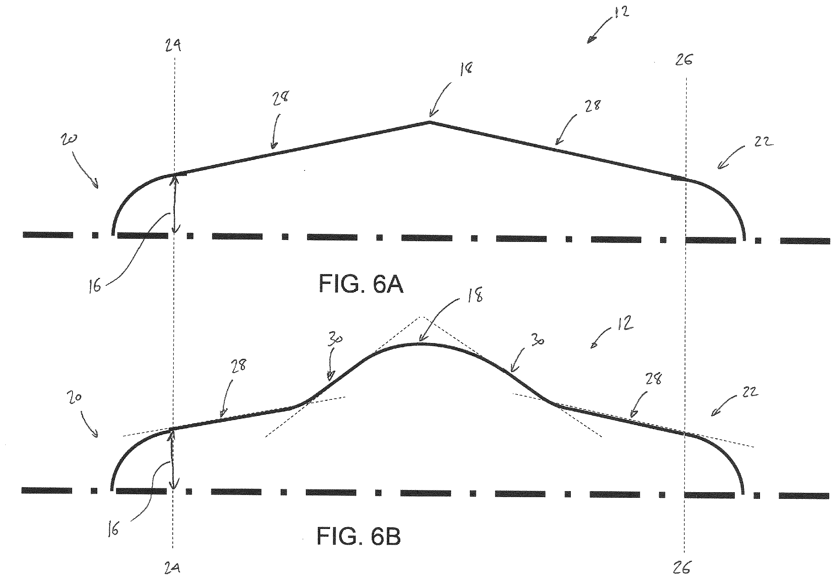

Figures 6A to 6D are graphs illustrating the variation in beam diameter 16 along the length of the beam 12 within a lattice structure 8. In each of Figures 6A to 6D the solid black line represents the outer surface of the beam 12 and the dashed line represents the central axis of the beam (i.e. the axis of rotational symmetry for the beam 12), such that the distance between the solid black line and the dashed line represents the radius of the beam, and thus the variation in diameter 16 of the beam along its length. Further, in each of Figures 6A to 6D, the region at the left hand side of the graph where the solid black line curves towards the dashed line (or central axis) represents the first end of the beam 12 at the intersection (or node) 14 of the first unit cell 10, whilst the region at the right hand side of the graph where the solid black line also curves towards the dashed line (or central axis) represents the second end of the beam at the intersection (or node) 14 of the second unit cell 10.

It will be appreciated that, since each end of a beam 12 meets other beams at an intersection 14 of the unit cell 10, the overall size of the intersection (in other words, the amount of solid material and the dimensions of the intersection 14) is determined by the respective diameters of the beams 12 that meet at that intersection 14. In other words, beams 12 with a relatively small diameter 16 will meet closer to the geometric centre of the intersection 14, and therefore the intersection 14 will have a smaller overall size. As the beam diameter 16 increases, the beams 12 will meet further away from the geometric centre of the intersection 14, and therefore the overall size of the intersection 14 increases as the beam diameter 18 increases (and in particular, the beam diameter at the ends of the beam). In practice, since size of each intersection 14 is defined by the diameters of the intersecting beams 12, this means that an "end" of a beam can be defined in different ways.

In each of Figures 6A to 6D, there is defined a "nodal region" 20 at the left hand end of the graph, and a second "nodal region" 22 at the second end of the graph. This is to acknowledge that, if a beam is considered to extend from the geometric centre of the first intersection to the geometric centre of the second intersection, the beam will in fact intersect, meet or otherwise touch adjacent beams at a distance away of the geometric centre of each intersection defined by the local diameter of the beam as described above. This is illustrated in Figures 6A to 6D by the horizontal dashed lines 24, 26. Dashed line 24 can therefore be considered to be the first end of the beam 12, since this is the point on the beam 12 at the first intersection 14 where the beam intersects, meets or otherwise touches the outer surface of the surrounding beams at the first intersection 14. Equally, dashed line 26 can be considered to be the second end of the beam 12, since this is the point on the beam 12 at the second intersection 14 where the beam intersects, meets or otherwise touches the outer surface of the surrounding beams at the second intersection 14.

In the first nodal region 20 (i.e. between the first end 24 of the beam 12 and the geometric centre of the first intersection) the diameter 16 of the beam 12 is illustrated as tending to zero from the first 24 end of the beam 12 to the geometric centre of the first intersection since the beam is in contact with the surround beams and were the beam diameter to remain constant there would be a "double accounting" of material at the intersection with adjacent beams overlapping. This reduction in diameter of the beam towards the geometric centre of the first intersection is therefore to prevent any overlap of beams (and therefore material) at the intersection. The same is true at the second nodal region 22 (i.e. between the second end 26 of the beam 12 and the geometric centre of the second intersection), where the diameter 16 of the beam 12 is illustrated as tending to zero from the second end 26 of the beam 12 to the geometric centre of the second intersection in order to prevent any overlap of beams (and therefore material) at the intersection.

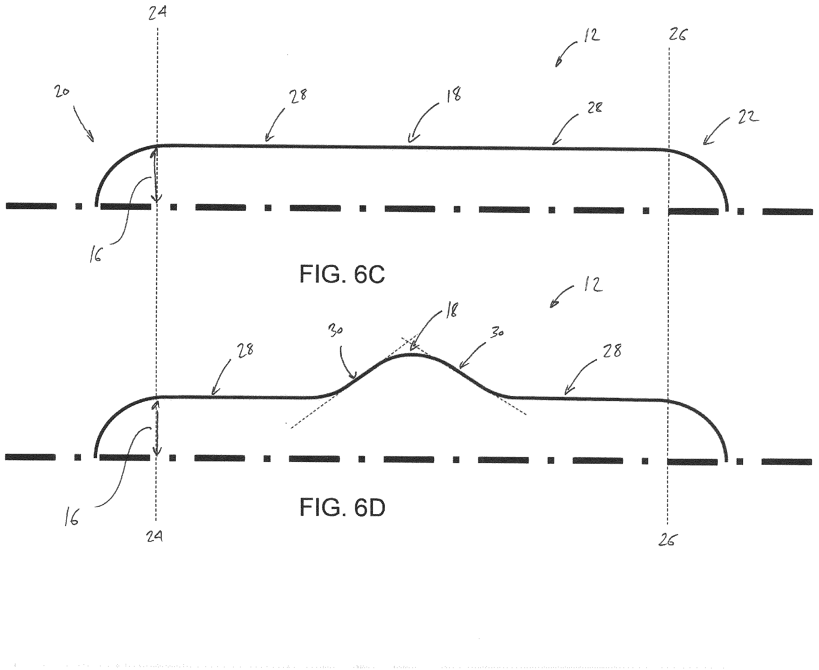

The midpoint 18 of the beam in each of Figures 6A to 6D is in the middle of the beam 12, equidistance between the first nodal region 20 and the second nodal region 22 (and equidistance between the first end 24 of the beam and the second end 26 of the beam and equidistance between adjacent intersections, respectively). In each of Figures 6A to 6D it can be seen that the variation in diameter 16 along the length of each beam 12 is symmetric about the midpoint 18 of the beam. In other words, it can be seen that the variation in diameter 16 of the beam 12 from the first end 24 of the beam to the midpoint 18 of the beam 12 is the same as the variation in diameter 16 of the beam 12 from the second end 26 of the beam to the midpoint 18 of the beam 12. In Figures 6A and 6B it can be seen that the diameter 16 of the beam 12 increases from the first end 24 of the beam towards the midpoint 18 of the beam 12, and that the diameter 16 of the beam 12 increases from the second end 26 of the beam towards the midpoint 18 of the beam 12. In Figure 6C the diameter 16 of the beam is constant between the first end 24 of the beam and the second end 26 of the beam (and therefore the diameter 16 of the beam 12 from the first end 24 of the beam to the midpoint 18 of the beam 12 is the same as the diameter 16 of the beam 12 from the second end 26 of the beam and the midpoint 18 of the beam 12). Figure 6C therefore represents the variation in diameter 16 of each of the beams 12 illustrated in the lattice structure 8 of Figure 4.

Figure 6A represents the variation in diameter 16 of each of the beams 12 illustrated in the lattice structure 8 of Figure 5. In other words, in Figure 6A the diameter 16 of beam 12 is a maximum at the midpoint 18 of the beam, and the diameter 16 of the beam 12 increases linearly along the length of the beam from the adjacent intersections to the midpoint 18; in other words, the diameter 16 of the beam 12 increases linearly from the first end 24 of the beam (and the nodal region 20 of the first intersection) to the midpoint 18 and from the second end 26 of the beam (and the nodal region 22 of the second intersection) to the midpoint 18, such that variation in diameter 16 along the length of the beam 12 in Figure 6A is symmetric about the midpoint 18 of the beam 12 as described above.

In each of Figures 6B and 6D, the diameter 16 of beam 12 is also a maximum at the midpoint 18 of the beam, and the diameter 16 of the beam 12 increases along the length of the beam from the adjacent intersections (the first end 24 and the second end 26) to the midpoint 18, but variation in diameter 16 of the beam 12 changes along the length of the beam. In Figures 6B and 6D, each beam comprises a plurality of sections 28, 30, where second section 30 is located between the first section 28 and the midpoint 18 (and therefore the first section 28 is located between the second section 30 and an end of the beam 12). Since the variation in diameter 16 along the length of the beam 12 in each of Figures 6B and 6D is symmetric about the midpoint 18 of the beam 12 as described above, there is a first section and a second section between the first end 24 of the beam and the midpoint 18, and between the second end 26 of the beam and the midpoint 18.

In Figure 6B, the diameter 16 of the beam 12 in the first section 28 increases linearly with a first gradient (indicated by a dashed line), and the diameter 16 of the beam 12 in the second section 30 increases linearly with a second gradient (indicated by another dashed line), where the second gradient is greater than the first gradient. In other words, the rate of increase of the diameter 16 of the beam 12 is greater closer to the midpoint 18 (i.e. in the second section 30) than at the ends 24, 26 of the beam (i.e. in the first section). Equally, in Figure 6D it can be seen that the diameter 16 of the beam 12 is constant in the first section 28, whereas the diameter 16 of the beam 12 in the second section 30 increases linearly. In each of Figures 6B and 6D, the variation in diameter 16 of the beam 12 between the first section 28 and the second section 30 is curved (or rounded) to provide a smooth transition in diameter between the first section 28 and the second section 30 (in other words, a fillet is added). Equally, the variation in diameter 16 of the beam 12 at the midpoint in each of Figures 6B and 6D is curved, rounded or filleted to provide a smooth transition in diameter around the midpoint between the second sections 30 on either side of the midpoint. The diameter 16 is still, however, maximum at the midpoint 18.

The heat exchanger as described above may comprise of an integrated mass of consolidated material, for example made by additive manufacture. This contrasts with heat exchangers where the respective channels are manufactured from a number of separate components. Hence, the plurality of fluid flow channels, including at least one secondary heat exchanging surface in the form of a lattice structure as described above may be formed together as one entity from a single body of material.

The heat exchanger described above can be used in a range of engineering systems. It can be used for a system comprising a combustor for generating heat by combusting a fuel and a recuperator for recovering heat from exhaust gas output by the combustor. The recuperator may comprise the heat exchanger as discussed above. Equally, the heat exchanger descriebd above could be an air-oil heat exchanger, such as those used within gas turbines to cool oil from bearing chambers and gear boxes by using air from the bypass duct, and/or for air cooling such as heat sinks for cooling electronics such as computer servers or electric vehicle systems. Compactness and weight are important requirements for each of these systems. By improving the heat exchanger efficiency, the heat exchanger can often be made smaller as shorter channels may be sufficient to provide a given amount of heat exchange, which also reduces the overall mass of the heat exchanger.

For example the heat exchanger can be formed by additive manufacture. In additive manufacture, an article may be manufactured by successively building up layer after layer of material in order to produce an entire article. For example the additive manufacture could be by selective laser melting, selective laser centring, electron beam melting, etc. The material used for the heat exchanger can vary, but in some examples may be a metal, for example aluminium, titanium or steel or could be an alloy. In some cases the heat exchanger may be formed in one single process whereby the layers making up the respective parts of the heat exchanger may be laid down successfully by additive manufacture.

The additive manufacture process may be controlled by supplying an electronic design file which represents characteristics of the design to be manufactured, and inputting the design file to a computer which translates the design file into instructions supplied to the manufacturing device. For example, the computer may slice a three-dimensional design into successive two-dimensional layers, and instructions representing each layer may be supplied to the additive manufacture machine, e.g. to control scanning of a laser across a powder bed to form the corresponding layer. Hence, in some embodiments rather than providing a physical heat exchanger, the technique could also be implemented in a computer-readable data structure (e.g. a computer automated design (CAD) file) which represents the design of a heat exchanger as discussed above. Thus, rather than selling the heat exchanger in its physical form, it may also be sold in the form of data controlling an additive manufacturing machine to form such a heat exchanger. A storage medium may be provided storing the data structure.

Forming the heat exchanger with plurality of fluid flow channels, including at least one secondary heat exchanging surface in the form of a lattice structure as described above using additive manufacture is particularly advantageous as it allows for complex internal geometries to be formed which may not be possible using traditional manufacturing methods, such as the beam diameter profiles as described above with reference to Figures 6A to 6D.

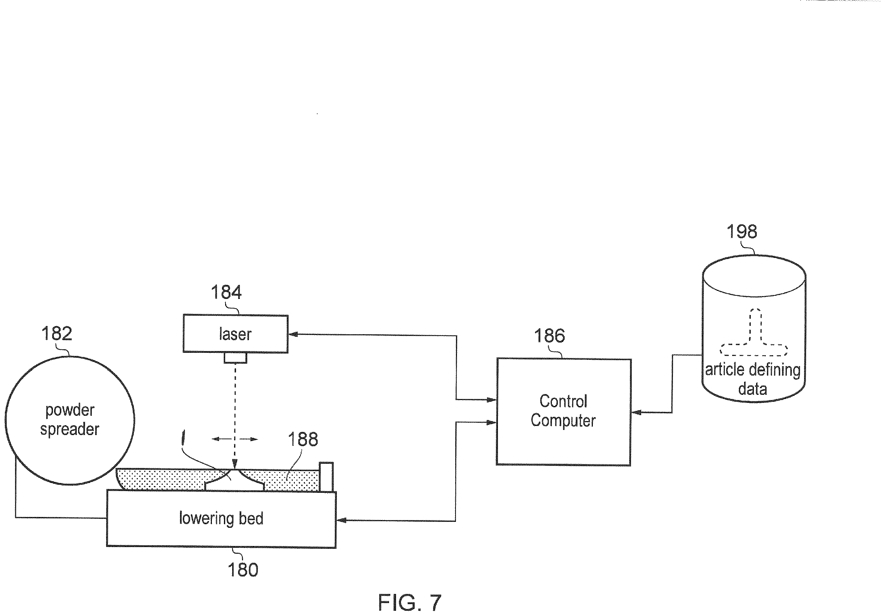

Figure 7 schematically illustrates an example of additive manufacture. In this example, laser fused metal powder 188 is used to form an article 1 such as the heat exchanger described above. The article 1 is formed layer-by-layer upon a lowering powder bed 180 on top of which thin layers of metal power to be fused are spread by a powder spreader 182 prior to being melted (fused) via a scanning laser beam provided from a laser 184. The scanning of the laser beam via the laser 184, and the lowering of the bed 180, are computer controlled by a control computer 186. The control computer 186 is in turn controlled by a computer program (e.g. computer data defining the article 1 to be manufactured). This article defining data is stored upon a computer readable non-transitory medium 198. Figure 7 illustrates one example of a machine which may be used to perform additive manufacture. Various other machines and additive manufacturing processes are also suitable for use in accordance with the present techniques, whereby a heat exchanger 1 is manufactured with channels including a heat exchange surface in the form of a lattice structure comprising a repeating unit cell with beams, wherein the beams vary in diameter along the length of each beam as discussed above.

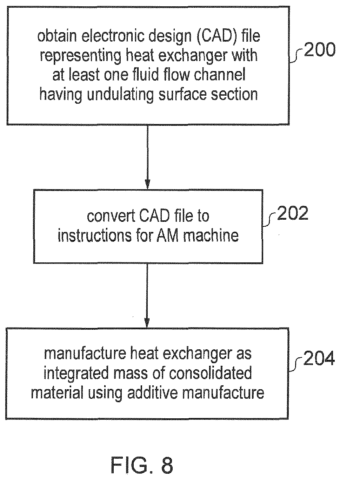

Figure 8 shows a method for manufacturing a heat exchanger 1. At step 200 a computer automated design (CAD) file is obtained. The CAD file provides a data structure which represents the design of heat exchange surface in the form of a lattice structure comprising a repeating unit cell with beams, wherein the beams vary in diameter along the length of each beam as discussed above. For example, obtaining the CAD file at step 200 may comprise a designer generating a three-dimensional (3D) model of the heat exchanger from scratch, or could comprise reading an existing design from a recording medium or obtaining the CAD file via a network. The design file may represent the 3D geometry to be manufactured.

At step 202 the CAD file is converted to instructions for supplying to an additive manufacturing machine. The instructions control the additive manufacturing machine to deposit or form respective layers of material, which are built up layer by layer to form the overall heat exchanger. For example, the 3D design represented by the CAD file may be sliced into layers each providing a two-dimensional representation of the material to be formed in the corresponding layer.

At step 204 the converted instructions are supplied to an additive manufacturing machine which manufactures the heat exchanger as an integrated mass of consolidated material using additive manufacture. The heat exchanger can be made from various materials, e.g. metals or alloys, such as titanium or stainless steel, or a polymer for example. Various forms of additive manufacturing can be used, but in one example the additive manufacture uses selective laser melting.

As described above, the present disclosure relates to (but it not limited to) a heat exchanger comprising a plurality of fluid flow channels, at least one of the fluid flow channels comprising at least one secondary heat exchanging surface, wherein the at least one secondary heat exchanging surface is in the form of a lattice structure comprising a repeating unit cell with beams, wherein the beams vary in diameter along the length of each beam.

Thus, there has been described a heat exchanger, a method of manufacturing a heat exchanger and a computer-readable data structure.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

1. A heat exchanger comprising:
a plurality of fluid flow channels;
at least one of the fluid flow channels comprising at least one secondary heat exchanging surface, wherein the at least one secondary heat exchanging surface is in the form of a lattice structure comprising a repeating unit cell with beams, wherein the beams vary in diameter along the length of each beam.

2. The heat exchanger according to claim 1, wherein the unit cell repeats with triple periodicity.

3. The heat exchanger according to claim 1 or 2, wherein each beam of a unit cell meets at an intersection.

4. The heat exchanger according to claim 3, wherein the diameter of each beam is a maximum at a midpoint of each beam, wherein the midpoint is equidistance between adjacent intersections.

5. The heat exchanger according to claim 4, wherein the diameter of each beam increases along the length of the beam in a direction away from the intersection.

6. The heat exchanger according to claim 5, wherein the diameter of each beam increases linearly along the length of the beam from the intersection to the midpoint.

7. The heat exchanger according to claim 4, wherein each beam comprises a plurality of sections, wherein the diameter of each beam along a first section of the plurality of sections is constant and the diameter of each beam along a second section of the plurality of sections increases linearly, wherein the second section is between the first section and the midpoint.

8. The heat exchanger according to any one of the preceding claims, wherein the variation in diameter along the length of each beam is symmetric about the midpoint of the beam.

9. A method of manufacturing a heat exchanger comprising:
forming a plurality of fluid flow channels;
at least one of the fluid flow channels comprising at least one secondary heat exchanging surface, wherein the at least one secondary heat exchanging surface is in the form of a lattice structure comprising a repeating unit cell with beams, wherein the beams vary in diameter along the length of each beam.

10. The method of claim 9, wherein the heat exchanger is made by additive manufacture.

11. A computer-readable data structure representing a design of a heat exchanger according to any of claims 1 to 8.

12. A storage medium storing the data structure of claim 11.
